# EUROPEAN PATENT SPECIFICATION

(11) **EP 0 491 513 B1**
(45) Date of publication and mention of the grant of the patent: **22.06.1994**
(21) Application number: 91311395.7
(22) Date of filing: 06.12.1991
(51) Int. Cl.: B62D 43/04, B66D 1/14, F16H 57/12

(54) **Winching device**
Hebevorrichtung
Treuil

(30) Priority: 12.12.1990 GB 9027002
(43) Date of publication of application: 24.06.1992
(73) Proprietor: Metallifacture Limited, Redhill Nottingham NG5 8PY (GB)
(72) Inventor: Parvinmehr, Hossein, Dr., Duffield, Derbyshire DE3 4DT (GB)
(74) Representative: MacGregor, Gordon

(56) References cited:
- US-A- 4 693 453

## Description

This invention relates to a winching device and to a vehicle spare wheel carrying assembly, incorporating such a winching device.

In some vehicles, it is usual to support a spare wheel beneath the body of the vehicle. The spare wheel is held, in a stowed position, with the tyre pressed against formations of the body, by means of a winching device holding a support cable for the spare wheel under tension. The winch can be operated, by means of a detachable handle, to lower the spare wheel on the cable to an accessible position. The device includes a pulley on which the cable is wound.

The winching device incorporates an eccentric gear mechanism, which provides a self-locking action, whereby a force exerted on the cable should not cause rotation of the pulley. The pulley should be rotatable only by rotation of an actuating shaft, designed to be engaged by the handle.

Winching devices of this type are disclosed in GB-A-1506244, GB-A2235911 and US-A-4625947.

GB-A-2235911, for example, which corresponds to the preamble of claim 1, discloses a torque arm connected between a gear and a point fixed relative to a casing, which is secured, in use, to the vehicle. The torque arm is reciprocable and serves to permit operation by rotation of the shaft, while tending to resist direct rotation of the pulley.

It has been found that vibration of the vehicle, in use, sometimes causes the cable to unwind, so that the spare wheel comes loose. This produces more substantial vibration, which can lead to damage to the winching device, the spare wheel carrying assembly, or the spare wheel itself, and possibly lead to release of the spare wheel.

The vibration causes problems, due to the necessary tolerances in manufacture and also due to the necessity to provide for free operation of the device. It is theoretically best to locate the engagement point, between the torque arm and casing, as close as possible to the axis of the actuation shaft. In practice, however, the forces are such that the parts will be damaged and the device will not operate.

The present invention is directed to solving the prior art problem.

The present invention provides a winching device comprising a support, a rotatable pulley mounted on the support and having a cable secured thereto for wrapping about the pulley, rotational actuating means, an eccentric gear mechanism between the actuating means and the pulley, this eccentric gear mechanism including a torque arm reciprocably movable relative to a fixed point on the support so as to resist direct rotation of the pulley, characterised by resilient means mounted on the support and having resilient engagement with the torque arm to take up tolerances in the construction.

Reference is now made to the accompanying drawings, wherein:-
Figure 1 is a front elevation of a winching device according to the invention;
Figure 2 is a rear elevation of the device;
Figure 3 is a side sectional view of the device;
Figure 4 is an exploded view of a part of the device; and

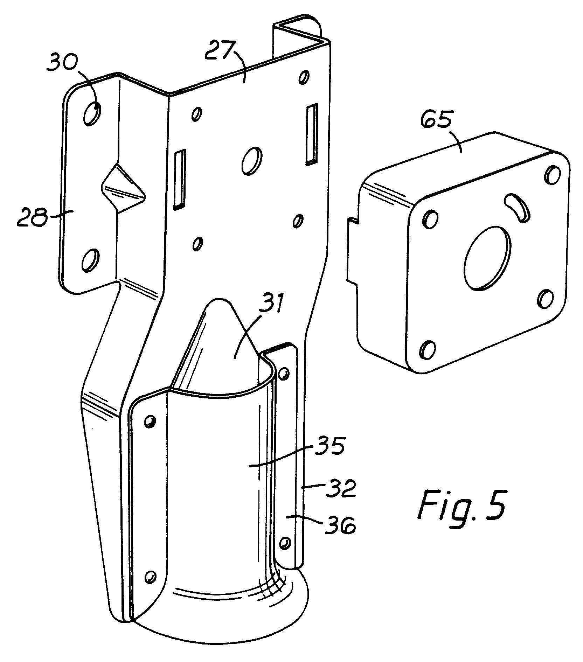

Figure 5 is a perspective view of a bracket part of the device.

The drawings illustrate part of a wheel engaging plate 11, which is used in conventional manner to bolt to a vehicle spare wheel under the vehicle chassis by means of apertures (10). The plate 11 is suspended by a suspension device 12 comprising a hollow tube 13 having an out-turned flange 14, from which the plate is suspended. The suspension device 12 includes a stem 15, within the tube 13, about which is mounted a helical spring 16 under compression between a head 17 on one end of the stem within the tube and an inturned flange 19 at the end of the tube 13 opposite to the plate. The stem 15 extends through the inturned flange 19 and has a further head 20, which bears on the inturned flange under the force of the spring. A cable 21 extends axially into the stem and is secured within the stem.

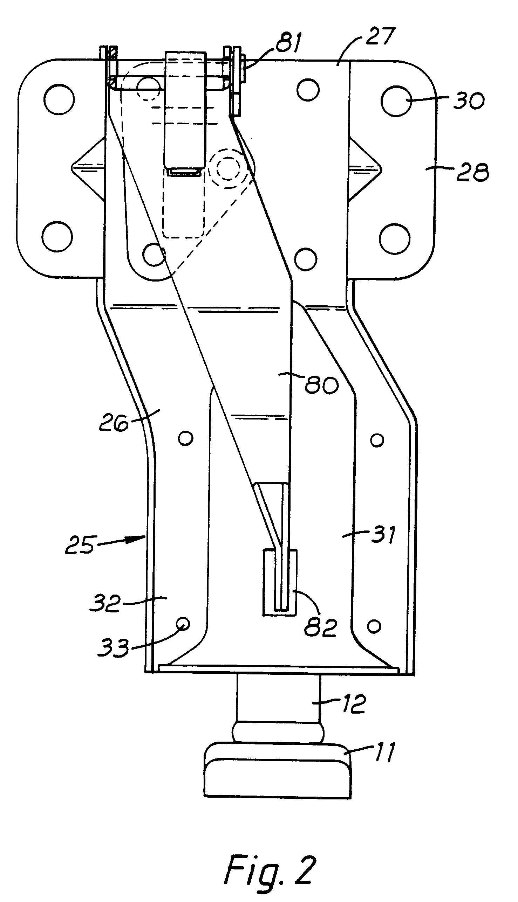

A support bracket 25 comprises a plate 26 which has an upper portion 27 formed with offset flanges 28. These flanges are bolted to the vehicle by means of apertures 30. A lower portion of the plate 26 comprises a part-cylindrical housing 31 having flanges 32 provided with apertures for rivets 33, shown in Figure 2.

A cylindrical sleeve is defined by the part-cylindrical housing 31 and a further part-cylindrical member 35 is provided, having flanges 36 secured to the flanges 32 of the part-cylindrical housing 31, by the rivets 33.

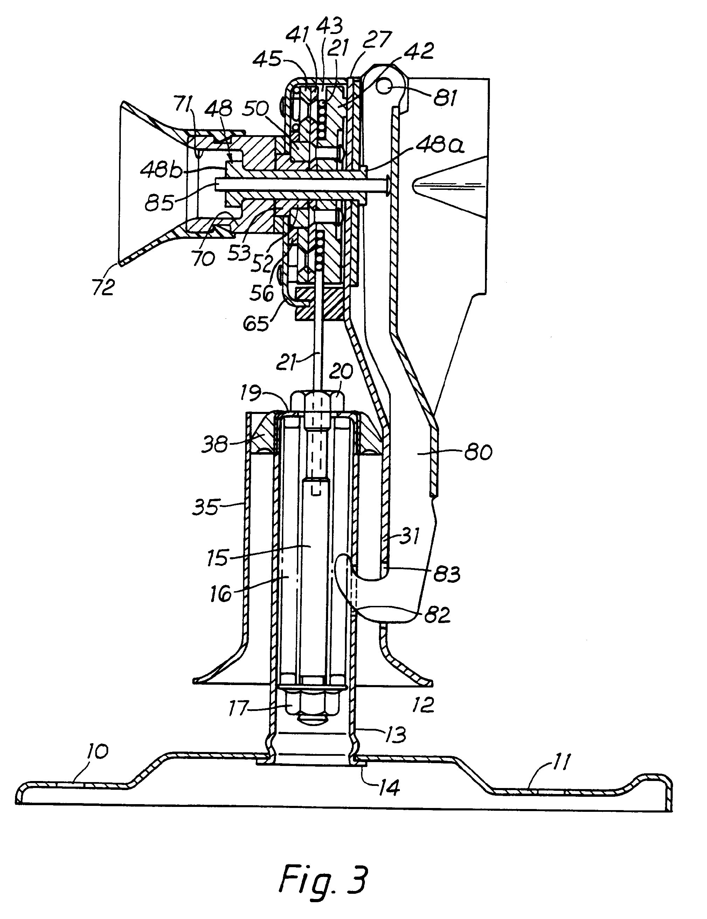

The cylindrical sleeve 31, 35 receives the suspension device 12, as shown in Figure 3. The tube 13 carries an external guide member 38, which is slidably received in the sleeve 31,35.

In use, the cable 21 can be raised by a winch, described below, so as raise the spare wheel support plate 11 until it abuts formations on a vehicle body. The plate is resiliently urged against the body in view of tension in the cable applied through the spring 16. The winch can also be used to release this tension, so that the spare wheel support plate 11 is lowered under gravity. During such operation, the tube 13 slides within the sleeve 31, 35.

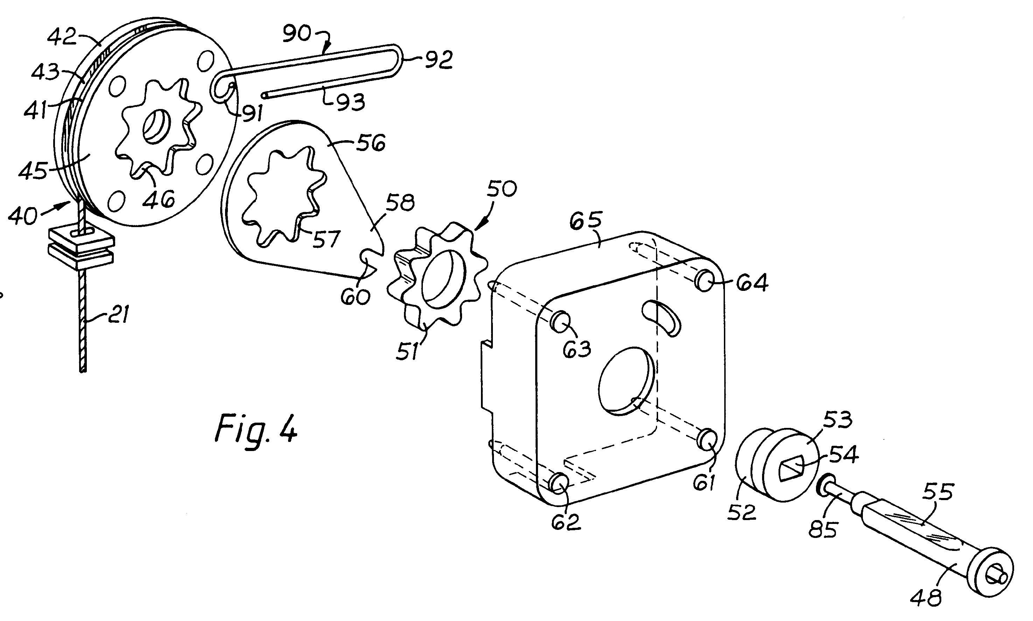

The winch is carried on the upper part 27 of the plate 26 of the support bracket 25. The winch includes a pulley 40 (see figures 3 and 4) formed from rivetted parts to define first and second sides 41, 42 with an annular channel 43 therebetween. The cable 21 is attached to the pulley, within the channel 43, and is wound on the pulley in order to tension the cable. A first gear 45 is secured to the first side 41 of the pulley and has a central aperture defined by internal gear teeth 46. The pulley is rotatably mounted on a pin defining a hub 48.

The first gear forms part of an eccentric gear mechanism including a second gear 50, having outer gear teeth 51, and rotatably mounted on an eccentric part 52 of a drive member 53. The drive member has a non-circular hole 54, with flats, and is non-rotatably engaged on a corresponding part 55 of the hub 48.

The gear mechanism includes a torque plate 56 having an aperture 57 formed complementary to the second gear and receiving this gear, so that the torque plate is non-rotatably connected to the gear. The torque plate has an arm 58, whose end is formed with an elongate slot 60, extending radially of the second gear 50. The slot engages with a rivet 61 secured to the support bracket 25.

Rotation of the hub 48 causes rotation of the drive member 53 with accompanying eccentric motion of the eccentric part 52. The torque plate 56 prevents rotation of the second gear 50, so that the first gear 45 is caused to rotate around the second gear. This motion causes rotation of the pulley 40 and winding of the cable 21 on the pulley. The torque plate resists rotation of the pulley 40 under the force exerted by tension in the cable 21.

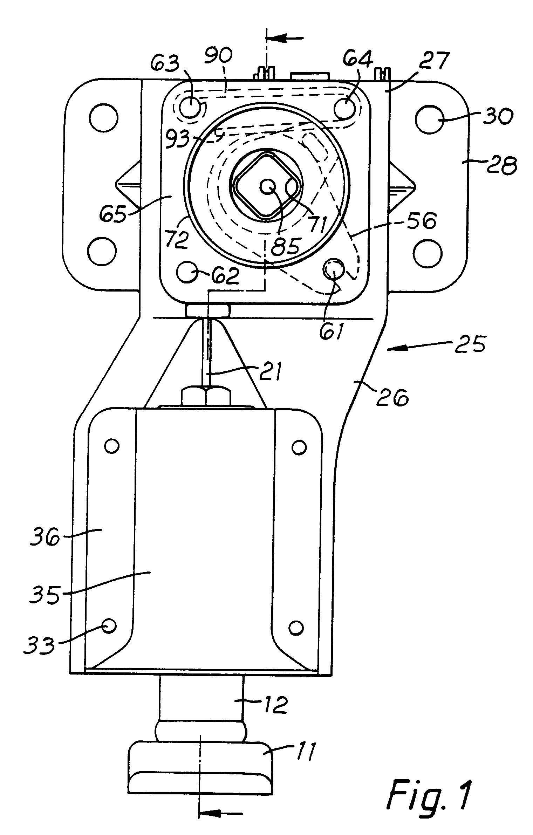

The rivet 61 is one of four bolts or rivets 61 to 64 used to secure a casing 65 to the bracket 25 (see Figure 1).

The hub 48 is located between the back of the bracket 25, by a flange 48a, and an apertured block 70 on the front of the casing 65, by a flange 48b. The block has a non-circular socket 71 for receiving an insertable tool (not shown) for rotating the block 70. The block is mounted on the non-circular part 55 of the hub 48, so that the hub is also rotated, the block defining actuating means. The block carried a flared guide 72 to assist location of the tool.

A safety device is also provided. This comprises a safety hook 80 pivoted at 81 to the bracket 25 and gravitationally urged to hook-engage in an aperture 82 in the tube 13 of the suspension device. If the cable 21 is accidentally released, the hook prevents the suspension device from falling. An aperture 83 in the sleeve 31, 35 permits engagement of the hook with the tube. The hook is gravitationally urged to the engagement position.

The hook is automatically released by insertion of the tool to actuate the mechanism. The hub 48 has an axial bore slidably receiving a release pin 85, which extends into the socket 71. The pin engages the hook 80 and is urged by the tool to pivot the hook out of engagement with the tube.

As shown most clearly in Figures 1 and 4, a spring 90 is provided. This is a bent wire spring having an eye 91 at one end. The opposite end forms a loop 92 from which a free end portion 93 extends. The eye 91 engages one of the casing rivets 63 and the loop engages another casing rivet 64 to hold the spring in position in the casing 65.

The free end portion 93 resiliently engages the torque plate 56 and urges the first gear 45 into mesh with the second gear 50. This arrangement takes up tolerances in the construction and ensures that vibration does not cause any reverse motion of the gears, with consequent release of tension in the winch and release of a spare wheel, in use.

## Claims

1. A winching device comprising a support (25), a rotatable pulley (40) mounted on the support and having a cable (21) secured thereto for wrapping about the pulley, rotational actuating means (48), an eccentric gear mechanism (45,50,52,53,56) between the actuating means (48) and the pulley (40), said eccentric gear mechanism including a torque arm (56) reciprocably movable relative to a fixed point (61) on the support (25) so as to resist direct rotation of the pulley, characterised by resilient means (90) mounted on the support (25) and having resilient engagement with the torque arm (56) to take up tolerances in the construction.

2. A winching device according to claim 1, wherein the support (25) includes a casing (65) mounted on a backing plate (27) by means of pins (61 to 64), and the resilient means is a spring (90) mounted on the pins.

3. A winching device according to claim 2, wherein the pins (61 to 64) are rivets or bolts.

4. A winching device according to claim 2 or 3, wherein one (61) of said pins defines said fixed point and the torque arm (56) has an elongate slot (60) receiving that pin.

5. A winching device according to claim 2, 3 or 4, wherein the spring comprises a bent-wire spring (90) having an eye (91) at one end, receiving one of the pins (63), a loop (92) between the ends and engaged with another of the pins (64), and a free end portion (93), at the opposite end and resiliently engaging the torque arm (56).

6. A winching device according to any preceding claim, wherein the actuating means comprises a hub (48) non-rotatably engaged with the gear mechanism (45,50,52,53,56) and provided with a non-circular socket (71) for receiving a tool.

7. A winching device according to claim 6, including a pivoted safety-hook (80) biased into engagement with a member (13) carried by the cable (21) to prevent release of the member on release of the cable, the hub (48) having a release pin (85) projecting into the socket (71) and axially movable in the hub by insertion of a tool to move the hook against said bias so as to release the member.

## Patentansprüche

1. Hebevorrichtung mit einem Träger (25), einer drehbaren, an dem Träger gelagerten und ein Drahtseil (21) aufweisenden Trommel (40), wobei das Drahtseil (21) an der Trommel befestigt ist, um sich darauf aufzuwickeln, einem Drehantriebsmittel (48), einem exzentrisch zwischen dem Drehantriebsmittel (48) und der Trommel angeordneten, einen Lastarm aufweisenden Getriebemechanismus (45,50,52,53,56), wobei der Lastarm (56) relativ zu einem Fixpunkt (61) an dem Träger (25) hin und her beweglich ist, um eine direkte Drehung der Trommel zu verhindern, dadurch gekennzeichnet, daß ein federnd nachgiebiges Mittel (90) an dem Träger (25) gelagert ist, das federnd nachgiebig an dem Lastarm (56) angreift, um Toleranzen der Konstruktion aufzunehmen.

2. Hebevorrichtung nach Anspruch 1, dadurch gekennzeichnet, daß der Träger (25) ein Gehäuse (65) aufweist, das mit Hilfe von Stiften (61 bis 64) auf einer Aufspannplatte montiert ist, und daß das federnd nachgiebige Mittel eine an den Stiften gelagerte Feder (90) ist.

3. Hebevorrichtung nach Anspruch 2, dadurch gekennzeichnet, daß die Stifte (61 bis 64) Nieten oder Bolzen sind.

4. Hebevorrichtung nach Anspruch 2 oder 3, dadurch gekennzeichnet, daß einer (61) der Stifte den Fixpunkt definiert und daß der Lastarm (56) einen diesen Stift aufnehmenden Langschlitz (60) aufweist.

5. Hebevorrichtung nach Anspruch 2, 3 oder 4, dadurch gekennzeichnet, daß die Feder eine gebogene Drahtfeder (90) mit einer Öse (91) zur Aufnahme eines der Stifte (63) an einem Ende, einer an einem anderen Stift (64) angreifenden Schleife (92) zwischen den Enden und mit einem federnd nachgiebig an dem Lastarm (56) angreifenden freien Endbereich (93) an dem gegenüberliegenden Ende aufweist.

6. Hebevorrichtung nach einem der voranstehenden Ansprüche, dadurch gekennzeichnet, daß das Drehantriebsmittel eine drehfest mit dem Getriebemechanismus (45,50,52,53,56) verbundene, mit einem unrunden Sockel (71) zur Aufnahme eines Werkzeugs versehene Nabe (48) aufweist.

7. Hebevorrichtung nach Anspruch 6, dadurch gekennzeichnet, daß ein schwenkbarer Sicherheitshaken (80) vorgesehen ist, der zum Angriff an einem von dem Drahtseil getragenen Glied (13) ausgerichtet ist, um ein Freigeben des Glieds bei Freigeben des Drahtseils zu verhindern, wobei die Nabe (48) einen Lösestift (85) aufweist, der in den Sockel (71) vorspringt und der durch Einstecken eines Werzeugs axial in der Nabe verschiebbar ist, um den Sicherheitshaken zwecks Freigabe des Glieds aus der vorgenannten Ausrichtung heraus zu bewegen.

## Revendications

1. Dispositif de treuil comprenant un support (25), une poulie rotative (40) montée sur le support et comportant un câble (21) fixé à celle-ci pour venir s'enrouler autour de la poulie, un moyen d'actionnement rotatif (48), un mécanisme d'engrenage excentrique (45, 50, 52, 53, 56) entre le moyen d'actionnement (48) et la poulie (40), ledit mécanisme d'engrenage excentrique comprenant un bras de torsion (56) pouvant aller et venir par rapport à un point fixe (61) sur le support (25) de façon à s'opposer à la rotation directe de la poulie, caractérisé par un moyen élastique (90) monté sur le support (25) et coopérant élastiquement avec le bras de torsion (56) pour absorber les tolérances de fabrication.

2. Dispositif de treuil selon la revendication 1, dans lequel le support (25) comprend un boîtier (65) monté sur une plaque d'appui (27) à l'aide d'axes (61, 64) et le moyen élastique est un ressort (90) monté sur les axes.

3. Dispositif de treuil selon la revendication 2, dans lequel les axes (61, 64) sont des rivets ou des boulons.

4. Dispositif de treuil selon la revendication 2 ou 3, dans lequel l'un (61) desdits axes définit le point fixe et le bras de torsion (56) comporte une fente allongée (60) recevant cet axe.

5. Dispositif de treuil selon la revendication 2, 3 ou 4, dans lequel le ressort est constitué par un ressort à fil recourbé muni d'un oeillet (91) à une extrémité, recevant l'un des axes (63), une boucle (92) entre les extrémités et coopérant avec un autre desdits axes (64), et une portion d'extrémité libre (93) située à l'extrémité opposée et coopérant élastiquement avec le bras de torsion (56).

6. Dispositif de treuil selon l'une quelconque des revendications précédentes, dans lequel le moyen d'actionnement comprend un moyeu (48) coopérant d'une manière non rotative avec le mécanisme d'engrenage (45, 50, 52, 53, 56) et muni d'une douille non circulaire (71) destinée à recevoir un outil.

7. Dispositif de treuil selon la revendication 6, comprenant un crochet de sécurité pivotant (80) sollicité pour venir s'engager sur un élément (13) supporté par le câble (21) pour empêcher l'élément de se dégager lors du relâchement du câble, le moyeu (48) comportant un doigt de libération (85) faisant saillie dans la douille (71) et mobile axialement dans le moyeu par introduction d'un outil pour déplacer le crochet à l'encontre de la sollicitation de façon à libérer l'élément.
